# EUROPEAN PATENT SPECIFICATION

(11) **EP 3 233 475 B1**
(45) Date of publication and mention of the grant of the patent: **06.01.2021**
(21) Application number: 15825832.7
(22) Date of filing: 10.12.2015
(51) Int. Cl.: B32B 15/18, B32B 15/20, B32B 3/12, E04B 2/74

(54) **MODULAR PANEL FOR HOSPITAL ENVIRONMENTS**
MODULARES PANEEL FÜR KRANKENHAUSUMGEBUNGEN
PANNEAU MODULAIRE POUR DES ENVIRONNEMENTS HOSPITALIERS

(30) Priority: 19.12.2014 IT BS20140215
(43) Date of publication of application: 25.10.2017
(73) Proprietor: Conf Industries S.r.l., 25039 Travagliato, Brescia (IT)
(72) Inventor: VENTURA, Antonio, I-25039 Travagliato (Brescia) (IT)
(74) Representative: Gualeni, Nadia
(86) International application number: PCT/IB2015/059518
(87) International publication number: WO 2016/097950

(56) References cited:
- EP-A2- 1 041 211
- WO-A1-2007/039044

## Description

This invention relates to a panelling system for hospital environments, realised with prefabricated modular panels usable in particular for walls.

The increase in requests from an ever more demanding clientele in terms of technology, performance, safety, reliability and comfort, has led to the need for close integration and dialogue between all the figures involved in the construction of a hospital ward, starting from the architectural and plant design through to the selection of the most suitable electromedical devices and the production of technical equipment and all the furnishings and finishes. So, there is increasing use of "integrated design", which considers each hospital environment as an "organism" where the interactions between the various parts (structure, architecture, systems, finishes, furnishings, etc.) affect each other determining the individual choices.
Document EP1041211A1 discloses a composite panel for use as flooring, partition walls or decorative wall panels, particularly for museums or exhibitions where it is desirable to provide a versatile medium to construct different layouts with striking visual effects.
Document US2009/0255193 discloses a mobile partition composed of several wall elements suitable for subdividing a room or usable as an outside termination.

There is a particularly felt need for an operating theatre that is a flexible technological platform that can be customised to the needs of users, with particular attention to efficiency, comfort and safety. It is therefore essential to integrate the panelling system for walls and suspended ceilings with the systems for filtering and diffusing the air, furnishings and technical equipment, in order to ensure functionality, flexibility and an appropriate aesthetic level.

Thus, there is a particularly felt need to achieve perfect compatibility between structures, walls, doors, furnishings, diffusion and environmental control of the air to achieve integrated and hybrid operating theatres with high visual and environmental results.

The purpose of this invention is to meet the needs of the sector.

This purpose is achieved by a prefabricated modular panel according to this invention that is remarkably strong and light. In addition, a panelling system realised using prefabricated modular panels according to this invention facilitates any changes and integrations of the hospital environment also in phases successive to assembly, making it extremely flexible and integratable at any time.

This purpose is achieved by a prefabricated modular panel and by a system of prefabricated modular panels according to claim 1 and 7. The dependent claims describe preferred or advantageous embodiments of the panel and of the panelling system.

The characteristics and advantages of the panelling system according to this invention will be apparent from the following description, given by way of non-limiting example, in accordance with the accompanying drawings, wherein:
- Figure 1 is an exploded view of the panelling system according to this invention;
- Figure 2 is a view of the upper profile of the panelling system according to this invention;
- Figure 3 is a perspective view of the side and lower profile of the panelling system according to this invention;
- Figure 4 is a sectional view of the panelling system according to this invention.

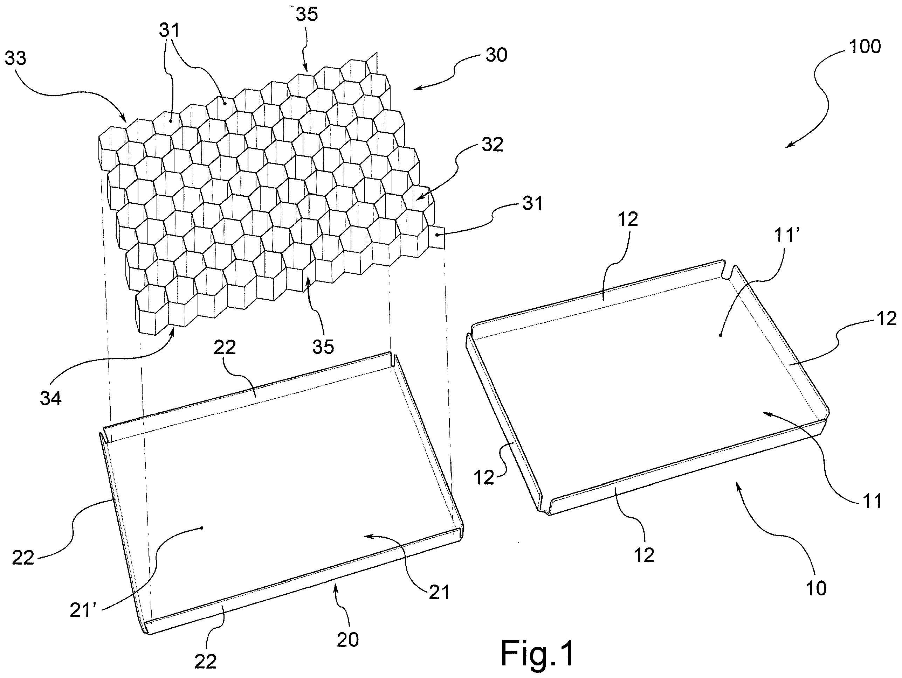

With reference to the accompanying drawings, and in particular to Figure 1, there is shown a panel 100 for a prefabricated modular panelling system for the realisation in particular of walls for hospital environments, for example operating theatres.

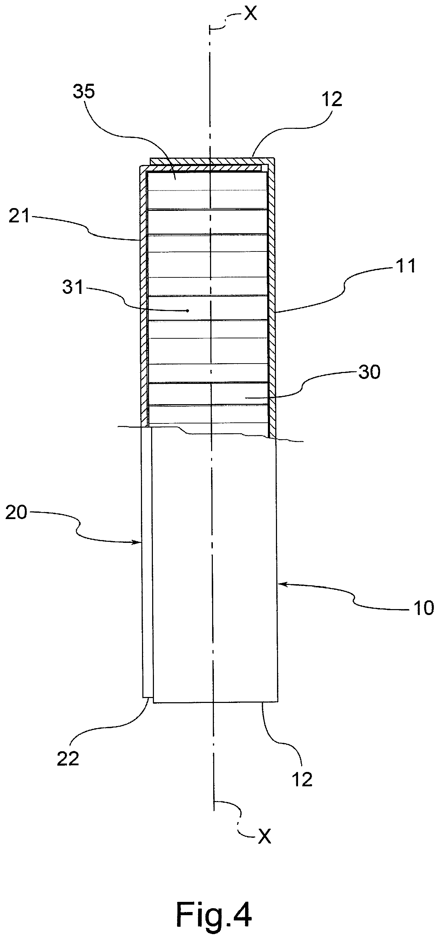

For the panel 100, a longitudinal axis X is defined, shown in Figure 4.

The panel 100 is constituted by a front portion 10, a back 20 and a central element 30.

Preferably, the front portion 10, the rear 20 and the central element 30 are fixed together by gluing.

The panel 100 has a sandwich structure, shown in figure 4, wherein the central element 30 is housed protected between the front portion 10 and the rear 20.

The central element 30 has an alveolar or honeycomb structure. In particular, the central element 30 is constituted by a set of walls 31, extending in transverse direction with respect to the axis X, joined to form a set of cells 32 that realise the honeycomb structure. Preferably, the cells 32 are hexagonal, pentagonal or octagonal.

The cells 32 are open structures, which extend between a front face 33 and a rear face 34 of the central element 30. The walls 31 also define the sides 35 of the central element 30.

Preferably, the central element 30 is made of aluminium.

The central element 30, which is the core of the panel 100, is an extremely light structure.

Compared to conventional panels in which the core is made of plasterboard, the panel 100 with a central element 30 (with honeycomb structure made of aluminium) is very light and easy to handle.

The front portion 10 and the back 20 has a tray structure, i.e., fitted with a main wall 11,21 and bent edges which define side walls 12,22 projecting substantially orthogonally in relation to the main wall 11,21.

Advantageously, a panel 100, with a containment rear 20 (i.e., provided with a tray structure) allows realising a modular panel that is simple and self-defined with respect, for example, to conventional panels in which the rear is plasterboard applied raw during the step of realising the wall.

Advantageously, the presence of the bent edges allows obtaining a front portion 10 and a rear 20 free of sharp corners or cutting edges.

Preferably, all the profiles of the front portion 10 and rear 20 are chamfered or radiused so as to obtain a front portion 10 and a rear 20 free of sharp corners or cutting edges.

As shown in Figure 1, the central element 30 is housable inside the rear 20. Once inserted, the central element 30 extends inside the back 20 so that the rear face 34 rests on an inner face 21' of the main wall 21 and the sides 35 rest on the side walls 22.

The "rear - central element" assembly is in turn housable inside of the front portion 10 to complete the sandwich structure (visible in Figure 4). Once inserted, the central element 30 extends inside the front portion 10 so that a front face 33 rests on an inner face 11' of the main wall 11 and the side walls 22 of the back 20 rest on the side walls 12 of the front portion 10.

Preferably, the panel 100 is made entirely of aluminium alloy, with the front portion 10 and rear 20 made of 12/10 sheet metal painted with epoxy paint, suitably bent at the edges with a sandwich-glued, honeycomb central element 30 made of ultra-lightweight aluminium.

In a variant, the front portion 10 and/or rear 20 are made of galvanised steel, stainless steel or aluminium alloy.

Preferably, the front portion 10 and rear 20 are painted with antibacterial and bacteriostatic paint that facilitates disinfection and asepsis. Preferably, the painting is carried out with silver ions, which are essential for the effective reduction of bacteria, viruses, mould and fungi, minimising the risk of cross contamination.

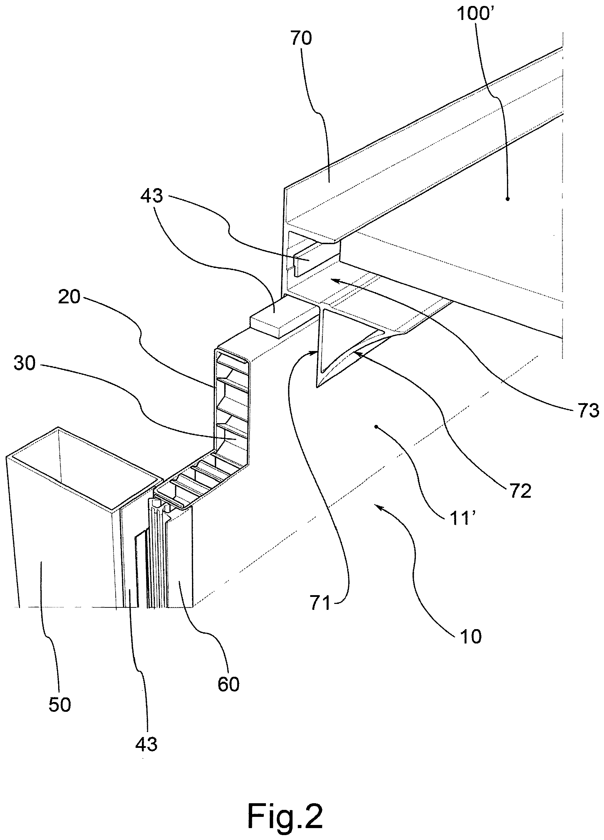

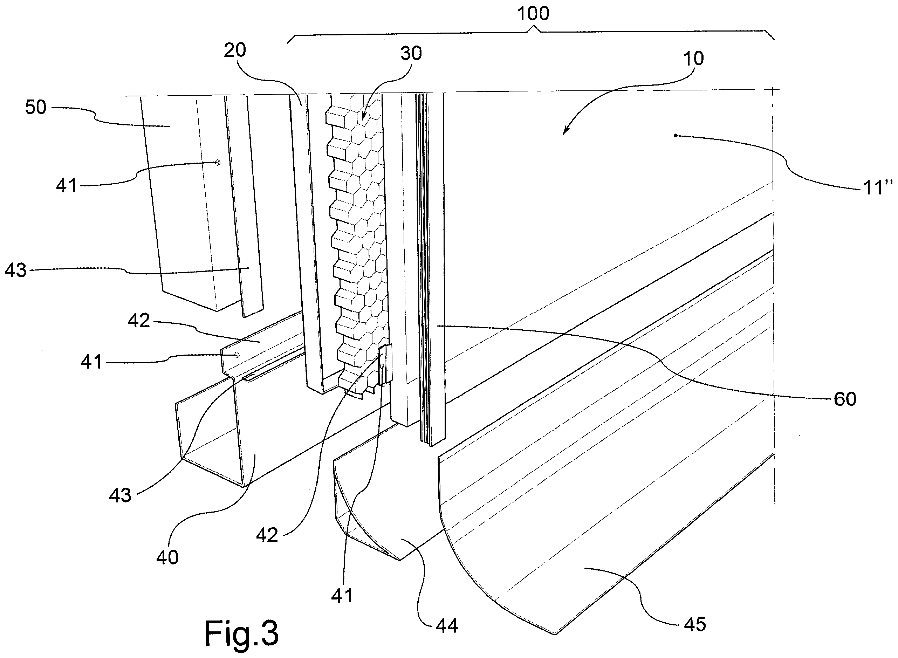

Preferably, as shown in Figures 2 and 3, in the version in which the panel 100 is used to make a wall of an operating theatre, the panel 100 is provided with a support structure.

The support structure comprises a floor guide 40, for example made of galvanised steel, fixable to the floor of the operating theatre, for example with screws and centring rings. The panel 100 is fixable to the floor guide 40 using fixing elements, such as for example self-drilling screws, insertable in suitable holes 41 provided on the floor guide 40 or on the panel (for example on suitable projections or tabs 42). The fixing between the panel 100 and floor guide 40 is also reinforced using special adhesive seals 43, provided between the guide 40 and the panel 100.

Preferably, the floor guide 40 is also provided with a profile 44 (for example a skirting with cove forming of height 100 mm) to support and connect it to the floor 45 (for example made of PVC).

The support structure comprises a vertical guide 50, for example an upright made of galvanised steel, fixable to the floor guide 40. The panel 100 is fixable to the vertical guide 50 using fixing elements, such as for example self-drilling screws, insertable in suitable holes 41 provided on the guide 50 and on the panel. The attachment between the panel 100 and vertical guide 50 is strengthened by means of adhesive seals 43, provided between the guide 50 and the panel 100.

Preferably, the vertical guides 50 (uprights) are fixed to the floor guide 40, while the attachment to the ceiling is made with ceiling guides 70, shown in Figure 2.

The support structure comprises a ceiling guide 70, for example made of galvanised steel, fixable to the ceiling of the operating theatre, for example with screws and centring rings. The panel 100 is fixable to the ceiling guide 70, for example by sliding or dovetailing in special brackets 71. The fixing between the panel 100 and ceiling guide 70 is also reinforced using special adhesive seals 43, provided between the guide 70 and the panel 100.

Preferably, the ceiling guide 70 is also provided with a profile 72 (for example a skirting with cove forming of height 100 mm), rounded and without right angles, for attachment to the suspended ceiling 100'.

The ceiling guide 70 also realises the connection between the panel 100 and the ceiling 100', and allows keeping the suspended ceiling 100' in position. Preferably, the suspended ceiling 100' is a panel 100, mounted horizontally instead of vertically. The suspended ceiling 100' is fixable to the ceiling guide 70, for example by sliding or dovetailing in special brackets 73. The fixing between the suspended panel 100' and ceiling guide 70 is also reinforced using special adhesive seals 43, provided between the guide 70 and the suspended ceiling 100'.

Preferably, to close the joints between the panels 100, are positioned closing seals 60, preferably made of non-toxic material that ensures sealing (for example silicone).

The prefabricated modular panelling system for operating theatres, realised using panels 100, preferably usable for walls, creates, in the dead space between the outer wall (of the building) and panel 100, a hermetic shell that completely isolates the operating theatre from the other environments of the surgical unit, allowing the insertion of sound-absorbing insulation and lead sheets in case X-ray protection is needed.

Innovatively, a prefabricated modular panel for hospital environments according to this invention provides high mechanical strength and lightness at the same time.

Advantageously, a prefabricated modular panel for hospital environments according to this invention is easily transportable and safe to handle thanks to the absence of sharp edges or cutting portions.

Advantageously, a prefabricated modular panel according to this invention is particularly suitable for hospital environments as it can be painted with antibacterial and bacteriostatic paint that facilitates disinfection and asepsis.

Advantageously, a prefabricated modular panel for hospital environments according to this invention is easily assembled/disassembled to form a wall because preassembled.

Advantageously, a panelling system realised using prefabricated modular panels according to this invention facilitates any changes and integrations of the hospital environment also in phases successive to assembly, making it extremely flexible and integratable at any time.

Advantageously, a panelling system realised using prefabricated modular panels according to this invention, preferably usable for both walls and suspended ceilings, ensures:
- the possibility of insertion in the wall of equipment, electrical outlets, medical gas outlets and the transit of systems in the walls;
- the possibility of adaptations, updating of utility points, changes over time and maintenance without rates theatre downtime;
- the integrated insertion in the walls of air-conditioning intakes;
- high mechanical resistance to accidental impacts with the walls;
- resistance to acids and detergents and/or disinfectants;
- speed of construction and certainty of execution times;
- fire load equal to "zero", compared to conventional panels with plasterboard;
- 100% recyclability, compared to conventional panels in which the plasterboard portion is a waste to be disposed.

## Claims

1. Modular panel (100) for hospital environments, consisting of a front portion (10), a back (20) and a central element (30), sandwiched between the front portion (10) and the back (20), wherein the central element (30) is a honeycomb structure,
**characterized in that** the front portion (10) and the back (20) have a tray structure fitted with a main wall (11, 21) and bent edges which define side walls (12,22) projecting in relation to the main wall (11,21).

2. Panel (100) according to claim 1, wherein the central element (30) is made of aluminium.

3. Panel (100) according to claim 1 or 2, wherein the central element (30) extends inside the back (20) so that a rear face (34) of the central element (30) rests on an inner face (21') of the main wall (21) and the sides (35) of the central element (30) rest on the side walls (22).

4. Panel (100) according to any of the previous claims, wherein the central element (30) extends inside the front portion (10) so that a front face (33) of the central element (30) rests on an inner face (11') of the main wall (11) and the side walls (22) of the back (20) rest on the side walls (12) of the front portion (10).

5. Panel (100) according to any of the previous claims, wherein the front portion (10) and/or the back (20) are made of aluminium or aluminium alloy or galvanised steel or stainless steel.

6. Panel (100) according to any of the previous claims, wherein the front portion (10) is painted with antibacterial and bacteriostatic paint with silver ions.

7. Panelling system for operating theatres, comprising a plurality of modular panels (100) according to any of the previous claims, and at least one support structure (40, 50, 70) for the support and attachment of the panels (100).

8. Panelling system according to claim 7, comprising a floor guide (40), to be secured to the floor of the operating theatre, suitable to support in a vertical position at least one panel (100) attachable to the guide (40) using attachment elements to make a wall.

9. Panelling system according to claim 7 or 8, comprising a ceiling guide (70), attachable to the ceiling of the operating theatre, suitable to support in a vertical position at least one panel (100) attachable to the guide (40) by means of brackets (71) to make a wall.

10. Panelling system according to claim 8 or 9, wherein the floor guide (40) and/or the ceiling guide (70) is provided with a profile (44, 72), a skirting with cove forming, to support and connect it to the floor or ceiling.

11. Panelling system according to any of the claims from 7 to 10, comprising at least one vertical guide (50), suitable to support in a vertical position at least one panel (100) attachable to the guide (50) by means of attachment elements to make a wall.

12. Panelling system according to any of the claims from 7 to 11, wherein the attachment between the panel (100) and guide (40, 50, 70) is strengthened by means of adhesive seals (43), provided between the guide (40, 50, 70) and the panel (100).

13. Panelling system according to any of the claims from 7 to 12, comprising at least one closing seal (60) to seal the joints between the panels (100).

## Patentansprüche

1. Modulares Paneel (100) für Krankenhausumgebungen, bestehend aus einem vorderen Abschnitt (10), einem hinteren Teil (20) und einem zentralen Element (30), welches sandwichartig zwischen dem vorderen Abschnitt (10) und dem hinteren Teil (20) angeordnet ist, wobei das zentrale Element (30) eine Wabenstruktur ist,
**dadurch gekennzeichnet, dass** der vordere Abschnitt (10) und der hintere Teil (20) eine Schalenstruktur aufweisen, welche mit einer Hauptwand (11, 21) und gebogenen Rändern ausgestattet ist, welche Seitenwände (12, 22) definieren, welche in Bezug auf die Hauptwand (11, 21) vorstehen.

2. Paneel (100) nach Anspruch 1, wobei das zentrale Element (30) aus Aluminium hergestellt ist.

3. Paneel (100) nach Anspruch 1 oder 2, wobei sich das zentrale Element (30) derart innerhalb des hinteren Teils (20) erstreckt, dass eine hintere Fläche (34) des zentralen Elements (30) an einer inneren Fläche (21') der Hauptwand (21) anliegt und die Seiten (35) des zentralen Elements (30) an den Seitenwänden (22) anliegen.

4. Paneel (100) nach einem der vorhergehenden Ansprüche, wobei sich das zentrale Element (30) derart innerhalb des vorderen Abschnitts (10) erstreckt, dass eine vordere Fläche (33) des zentralen Elements (30) an einer inneren Fläche (11') der Hauptwand (11) anliegt und die Seitenwände (22) des hinteren Teils (20) an den Seitenwänden (12) des vorderen Abschnitts (10) anliegen.

5. Paneel (100) nach einem der vorhergehenden Ansprüche, wobei der vordere Abschnitt (10) und/oder der hintere Teil (20) aus Aluminium oder einer Aluminiumlegierung oder galvanisiertem Stahl oder rostfreiem Stahl hergestellt sind.

6. Paneel (100) nach einem der vorhergehenden Ansprüche, wobei der vordere Abschnitt (10) mit einer antibakteriellen und bakteriostatischen Farbe mit Silberionen lackiert ist.

7. Paneelsystem für Operationssäle, umfassend eine Mehrzahl modularer Paneele (100) nach einem der vorhergehenden Ansprüche und wenigstens eine Halterungsstruktur (40, 50, 70) für die Halterung und die Befestigung der Paneele (100).

8. Paneelsystem nach Anspruch 7, umfassend eine an dem Boden des Operationssaals zu sichernde Bodenführung (40), welche dazu geeignet ist, in einer vertikalen Position wenigstens ein Paneel (100) zu haltern, welches unter Verwendung von Befestigungselementen an der Führung (40) befestigbar ist, um eine Wand zu bilden.

9. Paneelsystem nach Anspruch 7 oder 8, umfassend eine an der Decke des Operationssaals befestigbare Deckenführung (70), welche dazu geeignet ist, in einer vertikalen Position wenigstens ein Paneel (100) zu haltern, welches mittels Klammern (71) an der Führung (40) befestigbar ist, um eine Wand zu bilden.

10. Paneelsystem nach Anspruch 8 oder 9, wobei die Bodenführung (40) und/oder die Deckenführung (70) mit einem Profil (44, 72), einer Leiste mit einer Wölbungsformgebung, bereitgestellt ist, um sie an dem Boden oder der Decke zu haltern und damit zu verbinden.

11. Paneelsystem nach einem der Ansprüche von 7 bis 10, umfassend wenigstens eine vertikale Führung (50), welche dazu geeignet ist, in einer vertikalen Position wenigstens ein Paneel (100) zu haltern, welches mittels Befestigungselementen an der Führung (50) befestigbar ist, um eine Wand zu bilden.

12. Paneelsystem nach einem der Ansprüche von 7 bis 11, wobei die Befestigung zwischen dem Paneel (100) und der Führung (40, 50, 70) mittels adhäsiver Versiegelungen (43) gestärkt ist, welche zwischen der Führung (40, 50, 70) und dem Paneel (100) bereitgestellt sind.

13. Paneelsystem nach einem der Ansprüche von 7 bis 12, umfassend wenigstens eine schließende Versiegelung (60), um die Verbindungen zwischen den Paneelen (100) zu versiegeln.

## Revendications

1. Panneau modulaire (100) pour environnements hospitaliers, constitué d'une partie avant (10), d'un dos (20) et d'un élément central (30), pris en sandwich entre la partie avant (10) et le dos (20), dans lequel l'élément central (30) est une structure en nid d'abeilles,
**caractérisé en ce que** la partie avant (10) et le dos (20) possèdent une structure de plateau équipée d'une paroi principale (11, 21) et de bords incurvés qui définissent des parois latérales (12, 22) faisant saillie par rapport à la paroi principale (11, 21).

2. Panneau (100) selon la revendication 1, dans lequel l'élément central (30) est fait d'aluminium.

3. Panneau (100) selon la revendication 1 ou 2, dans lequel l'élément central (30) s'étend à l'intérieur du dos (20) de sorte qu'une face arrière (34) de l'élément central (30) repose sur une face interne (21') de la paroi principale (21) et les côtés (35) de l'élément central (30) reposent sur les parois latérales (22).

4. Panneau (100) selon l'une quelconque des revendications précédentes, dans lequel l'élément central (30) s'étend à l'intérieur de la partie avant (10) de sorte qu'une face avant (33) de l'élément central (30) repose sur une face interne (11') de la paroi principale (11) et les parois latérales (22) du dos (20) reposent sur les parois latérales (12) de la partie avant (10).

5. Panneau (100) selon l'une quelconque des revendications précédentes, dans lequel la partie avant (10) et/ou le dos (20) sont faits d'aluminium ou d'alliage d'aluminium ou d'acier galvanisé ou d'acier inoxydable.

6. Panneau (100) selon l'une quelconque des revendications précédentes, dans lequel la partie avant (10) est peinte avec une peinture antibactérienne et bactériostatique aux ions d'argent.

7. Système de panneaux pour salles d'opération, comprenant une pluralité de panneaux modulaires (100) selon l'une quelconque des revendications précédentes, et au moins une structure de support (40, 50, 70) pour le support et la fixation des panneaux (100).

8. Système de panneaux selon la revendication 7, comprenant un guide de sol (40), devant être solidarisé avec le sol de la salle d'opération, approprié pour porter dans une position verticale au moins un panneau (100) apte à être fixé au guide (40) à l'aide d'éléments de fixation pour créer une paroi.

9. Système de panneaux selon la revendication 7 ou 8, comprenant un guide de plafond (70), apte à être fixé au plafond de la salle d'opération, approprié pour porter dans une position verticale au moins un panneau (100) apte à être fixé au guide (40) au moyen d'équerres (71) pour créer une paroi.

10. Système de panneaux selon la revendication 8 ou 9, dans lequel le guide de sol (40) et/ou le guide de plafond (70) est muni d'un profilé (44, 72), une plinthe ayant une formation en anse, pour le supporter et le relier au sol ou au plafond.

11. Système de panneaux selon l'une quelconque des revendications 7 à 10, comprenant au moins un guide vertical (50), approprié pour porter dans une position verticale au moins un panneau (100) apte à être fixé au guide (50) au moyen d'éléments de fixation pour créer une paroi.

12. Système de panneaux selon l'une quelconque des revendications 7 à 11, dans lequel la fixation entre le panneau (100) et le guide (40, 50, 70) est renforcée au moyen de calfeutrages adhésifs (43), ménagés entre le guide (40, 50, 70) et le panneau (100).

13. Système de panneaux selon l'une quelconque des revendications 7 à 12, comprenant au moins un calfeutrage de fermeture (60) pour calfeutrer les joints entre les panneaux (100).
